# NEUE EUROPÄISCHE PATENTSCHRIFT

(11) **EP 2 488 290 B2**
(45) Veröffentlichungstag und Bekanntmachung des Hinweises auf die Entscheidung über den Einspruch: **30.03.2022**
(45) Hinweis auf die Patenterteilung: 06.04.2016
(21) Anmeldenummer: 09784018.5
(22) Anmeldetag: 15.10.2009
(51) Int. Cl.: B01F 7/04, B01F 15/00, B01F 15/06, B01F 3/20, B01F 3/22, A23G 1/00, A23G 1/10

(54) **VERFAHREN UND -VERWENDUNG ZUR ZERKLEINERUNG**
METHOD AND USE FOR COMMINUTION
PROCÉDÉ ET UTILISATION POUR LE BROYAGE

(43) Veröffentlichungstag der Anmeldung: 22.08.2012
(73) Patentinhaber: Bühler AG, 9240 Uzwil (CH)
(72) Erfinder: BRAUN, Peter, CH-8280 Kreuzlingen (CH); GERBER, Stefan, 8408 Winterthur (CH)
(74) Vertreter: Hepp Wenger Ryffel AG
(86) Internationale Anmeldenummer: PCT/EP2009/063446
(87) Internationale Veröffentlichungsnummer: WO 2011/044940

(56) Entgegenhaltungen:
- EP-A1- 0 879 562
- EP-A1- 1 541 222
- WO-A1-2007/066362
- DE-A1- 3 914 694
- GB-A- 741 412
- GB-A- 2 066 642
- US-A- 1 683 500
- US-A- 4 151 308
- US-A- 5 393 138
- US-A- 5 906 853

## Beschreibung

Die Erfindung betrifft ein Verfahren zur Bearbeitung einer Fettmasse sowie die Verwendung eines Zentrifugalmischers für die Bearbeitung einer Fettmasse.

Unter Fettmassen werden in der vorliegenden Anmeldung Produkte mit einem Fettanteil für die Nahrungsmittelproduktion verstanden. Bei diesen handelt es sich um feste und/oder flüssige Produkte, sowie um feste und/oder flüssige Produkte, die im Zentrifugalmischer entstehen. Bevorzugt handelt es sich um pastöse oder pulverförmige Massen.

Die Bearbeitung von Fettmassen, insbesondere in der Nahrungsmittelproduktion, ist ein Prozess mit mehreren Bearbeitungsschritten. Meist werden in einem ersten Schritt die Komponenten der Fettmasse zusammengemischt. Eine Komponente im Sinne dieser Anmeldung ist als Substanz oder Ingredienz zu verstehen, die in der Fettmasse entweder als Feststoff suspendiert oder auch in gelöster Form vorkommt oder dieser zugegeben wird. Beispielsweise kann eine Schokoladenmasse aus den Komponenten Kakaobutter, Zucker, Milchpulver sowie Kakaopulver bestehen.

Bei der herkömmlich bekannten Produktion von Schokoladenmasse werden die Komponenten zunächst in einem Rührkessel vermischt. In einem weiteren Schritt wird die Fettmasse in der Regel durch ein oder mehrere Walzwerke gewalzt, wobei die in der Masse suspendierten Feststoffe weiter zerkleinert werden. Beispielsweise kann die Masse vor dem Walzen in einem 2-, 3- oder 5-Walzwerk zunächst in einem 2-Walzwerk vorgewalzt werden. Dabei wird die Fettmasse weitgehend homogenisiert. Nach dem Walzen kann die Fettmasse weiteren Schritten unterzogen werden, wie beispielsweise Conchieren, wobei je nach Rezeptur weitere Komponenten der Masse beigegeben werden können.

Anschliessend kann die Fettmasse je nach beabsichtigter Verwendung noch weiteren Verfeinerungsschritten unterzogen werden.

Bei der Produktion einfacherer Produkte, wie Füllungen oder Compounds, werden die Komponenten in einer Vorrichtung zur Nasszerkleinerung vorgängig vermischt und in der Mühle zerkleinert. Bei der Nasszerkleinerung auch Verfahren bekannt, in denen die Mischung und Zerkleinerung im gleichen Prozessraum erfolgen.

Die Nasszerkleinerung kann in einer Rührwerkskugelmühle oder in einer Trommelmühle mit Schlagleisten oder Schlagmessern geschehen.

Ein Nachteil der bekannten Verfahren ist dabei, dass das Vermischen der Komponenten nicht kontinuierlich erfolgen kann und somit die Herstellung der Fettmasse nur im Batch-Verfahren erfolgen kann. Dieser Nachteil besteht auch bei den einfacheren Produkten, da sich das Mischen und Zerkleinern in der Mühle nicht kontinuierlich oder höchstens halbkontinuierlich durchführen lässt.

Ein weiterer Nachteil besteht auch darin, dass je nach Zusammensetzung der Fettmasse die Walzwerke neu justiert werden müssen, damit stets eine gute Qualität des Endprodukts gewährleistet ist. Diese Justierung ist bisweilen zeitaufwändig und erfordert eine Unterbrechung des Produktionsablaufs. Je nach der Komplexität des Walzwerks ist überdies auch grosse Erfahrung des Operateurs notwendig.

Eine Aufgabe der vorliegenden Erfindung besteht daher darin, ein Verfahren sowie eine Verwendung der eingangs genannten Art zu schaffen, welche die Nachteile des Bekannten überwindet und insbesondere eine kontinuierliche Bearbeitung einer Fettmasse erlaubt. Diese Aufgabe wird erfindungsgemäss mit einem Verfahren mit den Merkmalen des Anspruchs 1 gelöst.

Die Erfindung nutzt die Tatsache aus, dass sich durch Einsatz eines Zentrifugalmischers eine kontinuierliche Bearbeitung einer Fettmasse erzielen lässt.

Zentrifugalmischer sind an sich bekannt. Beispielsweise beschreibt die WO 2007/066362 einen solchen Mischer. Dabei wird die zu bearbeitende Substanz in einer bevorzugt im Wesentlichen horizontal angeordneten Trommel geführt. In der Trommel befindet sich eine rotierende Welle, die mindestens teilweise mit Stiften versehen ist. Zur Erzeugung eines Vorschubs können die Stifte spiralförmig angeordnet sein. Durch die hohe Drehzahl der Stifte wird das eingetragene Material durch die Wirkung der Zentrifugalkraft gegen die Innenwände der Trommel geschleudert. Die eingebrachte Substanz wird dabei ständig durch die Stifte durchmischt.

Die Dichte der Stifte kann entlang der Welle variieren. Bei spiralförmig angeordneten Stiften kann sich die Steigung der Spirale ändern, im Extremfall soweit, dass eine Rückförderung ermöglicht wird. Die Stifte können gleichartig sein, beispielsweise eine runde Querschnittsfläche von demselben Durchmesser aufweisen. Alternativ können unterschiedliche Arten von Stiften an der Welle angeordnet sein, beispielsweise mit unterschiedlichen Querschnittsflächen (polygonal, elliptisch, rund) oder mit unterschiedlichen Durchmessern. Bevorzugt sind die Stifte zylinderförmig, sie können aber auch keulenförmig oder schaufelartig sein.

Erfindungsgemäss wird ein offener Zentrifugalmischer verwendet. Dieser bietet einen freien Austrag der Massen, sodass es zu keinem Rückstau der Masse kommt.

Dazu ist das Ende der Trommel offen und nicht oder nur geringfügig verjüngt. Der Austrieb der Masse kann auch durch eine Austrageinrichtung, beispielsweise einen Schneckenförderer, geschehen. Bei einer zweiseitig gelagerten Mischerwelle kann der freie Austrag beispielsweise durch eine konzentrische Öffnung gewährleistet sein.

Weil die Fettmasse nicht zurück gestaut wird, bildet sich durch die Zentrifugalkraft an der inneren Wand des Zentrifugalmischers eine dünne Schicht der Masse. Durch Rotation der Stifte erfolgt ein Energieeintrag in die Masse, der dank der dünnen Schicht relativ gleichmässig über das ganze Volumen der bearbeiteten Masse erfolgt.

Vorteilhafterweise wird die Masse in dem Zentrifugalmischer auf einer vorwählbaren Temperatur gehalten. Dafür wird der Zentrifugalmischer, zum Beispiel mittels eines Doppelwandaufbaus temperiert, also gekühlt oder erwärmt.

Überraschend wurde zudem festgestellt, dass feste Komponenten in der Fettmasse im Zentrifugalmischer zerkleinert werden. Damit kann gleichzeitig mit dem Mischen der Komponenten eine Zerkleinerung der in der Masse suspendierten Komponenten erfolgen.

Als Fettmasse im Sinne der Anmeldung wird eine Masse verstanden, die zu mehr als 10 Gew.-% aus Fetten und Ölen besteht. Bevorzugt beträgt der Fettanteil der Masse mehr als 25 Gew.-%, besonders bevorzugt mehr als 30 Gew.-%.

Als Komponenten kommen grundsätzlich alle Stoffe, Substanzen oder Ingredienzien in Frage. Das erfindungsgemässe Verfahren wird zum Bearbeiten von Fettmasse in der Nahrungsmittelindustrie eingesetzt, nämlich von Kakao- oder Schokoladenmasse.

Bevorzugte Komponenten sind daher pflanzliche oder tierische Fette, wie beispielsweise Butter, Kakaobutter, Schmalz und dergleichen, aber auch Öle wie Palmöl, Kokosnussfett, Sonnenblumenöl und dergleichen sowie Mischungen davon.

Weitere Komponenten der durch das erfindungsgemässe Verfahren bevorzugt bearbeitete Fettmassen sind beispielsweise Kakaopulver, Kakaomasse, Zucker, Zuckerersatzstoffe, Vanillepulver, Puderzucker, Milchpulver, Speisestärke, Nuss- oder Mandelpulver und dergleichen. Weitere bevorzugte Komponenten sind beispielsweise Honig, Glukosesirup, Ahornsirup, Karamellsirup aber auch feste Komponenten wie Nüsse, Mandeln oder Rosinen und dergleichen sowie Mischungen davon.

Die Masse wird bei der Verarbeitung stets in Verarbeitungsrichtung weiter geschoben und wegen des freien Auslaufs des Zentrifugalmischers nicht zurück gestaut. Gleichzeitig steht die Masse unter dem Einfluss der Zentrifugalkraft. Die gesamte Masse befindet sich also in einem Abstand zur Welle.

Je nach Durchsatzmenge bildet die Masse eine dünne Schicht an der Wand, daher wird die gesamte Masse mit im Wesentlichen derselben Geschwindigkeit der Stifte bearbeitet.

Es erfolgt ein gleichmässiger Energieeintrag in einer engen Energiebreite über das ganze Volumen der bearbeiteten Masse.

Die Drehzahl der Welle liegt bevorzugt unter 6000 Umdrehungen pro Minute (rpm), besonders bevorzugt zwischen 500 rpm und 5000 rpm, ganz besonders bevorzugt zwischen 1000 rpm und 4000 rpm.

Typische verwendete Zentrifugalmischer haben einen Innendurchmesser der Trommel vom 50-500 mm. Die Stiftgeschwindigkeiten im Randbereich, denen die Masse ausgesetzt ist, liegen somit zwischen circa 5 km/h und circa 600 km/h.

Erfindungsgemäss wird der Durchmesser der suspendierten Partikel der Komponenten reduziert. Besonders bevorzugt wird der Durchmesser der Bestanteile dabei im Wesentlichen auf einen Wert unter 200µm, ganz besonders bevorzugt im Wesentlichen unter 150µm reduziert. Für die Behandlung einer Fettmasse mit beispielsweise 70-80% Zuckergehalt bedeutet dies, dass beim Sieben der Masse der Rückstand, der auf einem Sieb mit 200µm Maschendurchmesser, respektive 150µm Maschendurchmesser, zurückbleibt, vor dem Behandeln im Zentrifugalmischer beispielsweise noch über 99% und nach dem Behandeln weniger als 90% des Gesamtgewichts der Fettmasse ausmacht. Anders ausgedrückt beträgt der Gewichtsanteil der Masse, deren Bestandteile einen Durchmesser von kleiner als 200µm, respektive 150µm, aufweisen, vor der Behandlung im Zentrifugalmischer weniger als 1 % und nach der Behandlung mehr als 10% der Gesamtmasse. Der Durchmesser der Bestanteile wird also verringert.

Durch geeignete Wahl der Drehzahl der Welle des Zentrifugalmischers wird mindestens ein Parameter, welcher für die Konsistenz der Fettmasse charakteristisch ist, wie z.B. Viskosität, Feuchtigkeit, Homogenität und/oder Körnigkeit, auf einen vorbestimmten Wert eingestellt, bzw. auf ein Werteintervall eingegrenzt.

Dadurch ist es möglich, die Parameter der Masse auf Werte einzustellen, die optimal für den nächsten Verarbeitungsschritt sind. Wird die Masse z.B. nach dem Zentrifugalmischer in ein Walzwerk überführt, kann durch Einstellen der Konsistenz der Masse unter Umständen auf das Justieren der Walzen verzichtet werden.

Bevorzugt wird die Fettmasse nach dem Mischen und/oder Zerkleinern der Komponenten im Zentrifugalmischer gewalzt um den durchschnittlichen Durchmesser der suspendierten Partikel in der Fettmasse weiter zu reduzieren. Die geschieht bevorzugt in einem 2-, 3- oder 5-Walzwerk.

In einer Ausführungsform der vorliegenden Erfindung können die Komponenten der Fettmasse vor dem Zerkleinern im Zentrifugalmischer vorvermischt werden.

In einer weiteren Ausführungsform können die Komponenten der Fettmasse vor dem Zerkleinern im Zentrifugalmischer vorzerkleinert werden, beispielsweise in einem Walzwerk. Die jeweiligen Komponenten können beispielsweise getrennt vorzerkleinert und danach erst zusammengegeben werden.

Eine weitere bevorzugte Ausführungsform der Erfindung sieht vor, dass die Komponenten der Fettmasse vor dem Zerkleinern im Zentrifugalmischer sowohl vorvermischt als auch vorzerkleinert werden.

Die Komponenten der Fettmasse können in einer bevorzugten Ausführungsform der Erfindung in mindestens einem weiteren Zentrifugalmischer weiter zerkleinert und/oder vermischt werden.

In weiteren Schritten kann die Fettmasse weiter bearbeitet werden, beispielsweise durch Conchieren.

Die Zentrifugalmischer und/oder die übrigen Produktionsschritte können bei einem Produktionszyklus von der Fettmasse jeweils einmal oder mehrmals durchlaufen werden.

In einer Ausführungsform der vorliegenden Erfindung können die Komponenten der Fettmasse in einem weiteren Schritt in einer Vorrichtung zur Nasszerkleinerung, insbesondere einer Rührwerkskugelmühle, bearbeitet werden.

In einer Ausführungsform der vorliegenden Erfindung werden die Durchmesser von stückigen Bestandteilen der Fettmasse bei der Behandlung im Zentrifugalmischer reduziert. Bei stückigen Bestandteilen handelt es sich um Bestandteile der Fettmasse, wie Nüsse, Mandeln, Waffeln, Kekse, Krokant, Pralinen usw. oder Stücke davon, die bei Zusetzen zu der Fettmasse im Mittel Durchmesser von über 1mm, insbesondere über 5mm aufweisen.

Die Durchmesser der stückigen Bestandteile werden bei der Behandlung im Zentrifugalmischer reduziert. Das heisst, dass der Schwerpunkt der Grössenverteilung der Durchmesser nach der Behandlung bei einem kleineren Durchmesser als vor der Behandlung liegt. War die typische Teilchengrösse der stückigen Bestandteile vor der Behandlung im Zentrifugalmischer beispielsweise grösser als 5mm, so ist sich nachher kleiner als 5mm, war sie beispielsweise vor der Behandlung im Zentrifugalmischer grösser als 1mm, so ist sie nach der Behandlung kleiner als 1mm.

Die Reduzierung der Durchmesser kann mittels eines Siebes festgestellt werden. So ist der Anteil der stückigen Bestandteile, der in einem Sieb bestimmter Maschengrösse, beispielsweise der Maschengrösse 5mm oder 1mm, vor der Behandlung im Zentrifugalmischer zurückbleibt grösser als nach der Behandlung im Zentrifugalmischer.

Eine weitere Lösung der vorliegenden Aufgabe besteht darin, die Nachteile der bekannten Bearbeitungsmethoden von Fettmassen durch die Verwendung eines Zentrifugalmischers gemäss den Merkmalen des Anspruchs 10 zu verhindern.

Ein wesentlicher Vorteil bei der Verwendung eines Zentrifugalmischers liegt darin, dass das Mischen der Komponenten kontinuierlich erfolgen kann. Zusätzlich kann der durchschnittliche Durchmesser von suspendierten Partikeln in der Fettmasse reduziert werden. Ein weiterer Vorteil besteht auch darin, dass sich die Parameter, welche für die Konsistenz der Fettmasse charakteristisch sind, wie z.B. Viskosität, Feuchtigkeit, Homogenität und/oder Körnigkeit, durch geeignete Wahl der Drehzahl der Welle im Zentrifugalmischer auf vorbestimmte Werte eingestellt werden können.

Je nach benötigtem Durchsatz lassen sich auch mehrere Zentrifugalmischer nacheinander oder parallel verwenden. Dadurch ist eine kontinuierliche Bearbeitung einer Fettmasse selbst bei grossen Durchsatzmengen möglich.

Der Zentrifugalmischer wird bei der Bearbeitung einer Kakao- oder Schokoladenmasse verwendet.

In einer weiteren Ausführungsform der Erfindung kann ein Zentrifugalmischer zur Bearbeitung einer Brotaufstrichmasse verwendet werden. Gängige Brotaufstrichmassen sind beispielsweise Nougat- oder Nussmassen, Erdnussbutter und dergleichen.

In einer weiteren Ausführungsform kann ein Zentrifugalmischer zur Bearbeitung von Fettmassen, die stückige Bestandteile, wie Nüsse, Mandeln, Waffeln, Kekse, Krokant, Pralinen usw. oder Stücke davon enthalten, verwendet werden.

Die Durchmesser der stückigen Bestandteile werden bei der Behandlung im Zentrifugalmischer reduziert.

Besonders bevorzugt erfolgt die Verwendung eines Zentrifugalmischers zur Verflüssigung einer Fettmasse. Dabei können auch mehrere Zentrifugalmischer hintereinander verwendet werden. Es kann auch vorgesehen sein, mehrere Zentrifugalmischer verschiedener Grössen und/oder mit unterschiedlichen Wellendrehzahlen hintereinander zu verwenden.

Eine Produktionsstrecke für die Bearbeitung von Fettmassen erlaubt eine effiziente und kontinuierliche Bearbeitung.
Die Bearbeitung der Fettmasse erfolgt dabei in einer Richtung, der Bearbeitungsrichtung. Am Anfang liegen die Komponenten einzeln vor und werden in Bearbeitungsrichtung zunächst vermischt und die festen Komponenten zerkleinert und/oder suspendiert.

Die Produktionsstrecke umfasst dabei mindestens einen Zentrifugalmischer. Insbesondere umfasst die Produktionsstrecke einen, zwei, drei oder mehr Zentrifugalmischer. Die Zentrifugalmischer können dabei in Bearbeitungsrichtung sowohl hintereinander wie auch nebeneinander angeordnet sein.

Im Weiteren kann die Produktionsstrecke mindestens ein Walzwerk umfassen, welches in Bearbeitungsrichtung nach dem Zentrifugalmischer angeordnet ist. Bevorzugt ist dieses mindestens eine Walzwerk ein 2-, 3- oder 5-Walzwerk. In einer besonderen Ausführungsform der vorliegenden Erfindung sind in Bearbeitungsrichtung nach dem Zentrifugalmischer mehrere, insbesondere zwei 2-, 3- oder 5-Walzwerke angeordnet. Die Walzwerke können dabei sowohl hintereinander (in Serie) wie auch nebeneinander, also parallel, angeordnet sein. Durch eine serielle Anordnung lässt sich die Fettmasse über mehrere Walzwerke weiter verfeinern, während bei der parallelen Anordnung der Mengendurchsatz der Produktionsstrecke gesteigert werden kann.

Der mindestens eine Zentrifugalmischer ersetzt dabei bevorzugt den Rührkessel, die Mühle und/oder das Vorwalzwerk einer herkömmlichen Produktionsstrecke.

Eine weitere Ausführungsform der Erfindung sieht vor, dass in Bearbeitungsrichtung vor dem Zentrifugalmischer mindestens ein Walzwerk angeordnet ist. Vorzugsweise handelt es sich bei diesem mindestens einem Walzwerk um ein 2-Walzwerk.

Der mindestens eine Zentrifugalmischer dient dabei bevorzugt zum Einstellen der Parameter, welche die Konsistenz der Fettmasse bestimmen. Dadurch können entweder die Eigenschaften des Endproduktes optimal eingestellt werden oder ein in Bearbeitungsrichtung nach dem Zentrifugalmischer angeordnetes Walzwerk kann trotz unterschiedlicher Ingredienzen stets ohne Änderungen der Walzeneinstellungen betrieben werden.

In einer weiteren bevorzugten Ausführungsform der vorliegenden Erfindung ist in Bearbeitungsrichtung vor dem Zentrifugalmischer mindestens ein Rühr- und/oder Mischwerk angeordnet.
Eine weitere Ausführungsform der Erfindung sieht vor, dass in Bearbeitungsrichtung vor dem Zentrifugalmischer mindestens ein Walzwerk und eine Vorrichtung zum Conchieren bzw. Teilconchieren angeordnet sind. Je nach der Zusammensetzung der Fettmasse kann es beim Conchieren zu unerwünschten Agglomerationen kommen, die im Zentrifugalmischer zumindest teilweise wieder aufgelöst werden. Die Masse kann anschliessend wieder einem Walzwerk und/oder einer Conchiervorrichtung zugeführt werden.

In einer weiteren bevorzugten Ausführungsform der vorliegenden Erfindung ist in der Strecke mindestens eine Vorrichtung zur Nasszerkleinerung, beispielsweise eine Rührwerkskugelmühle oder eine Schlag- oder Reibleistenmühle, angeordnet.

Eine weitere Ausführungsform der Erfindung sieht vor, den Zentrifugalmischer derart in der Produktionsstrecke anzuordnen, dass der Zentrifugalmischer mindestens zweimal von der Fettmasse oder Teilen davon durchlaufen wird. Die Masse kann dazu in mindestens einem Kreislauf durch die Produktionsstrecke geführt werden.

Die Komponenten der Fettmasse können beispielsweise in einem Zentrifugalmischer zunächst gerührt und zerkleinert werden, anschliessend entweder gewalzt, conchiert und/oder in einer Vorrichtung zur Nasszerkleinerung behandelt werden und anschliessend alle oder einen Teil der Produktionsschritte wiederholen. Bei einem erneuten Durchlauf des Zentrifugalmischers können die Komponenten erneut gerührt und/oder zerkleinert werden und/oder veredelt werden. Dazu können sie in dem Zentrifugalmischer mit einer zur der Umgebungsatmosphäre unterschiedlichen Wirkatmosphäre beaufschlagt werden. Diese weist bevorzugt eine zur Umgebungsatmosphäre unterschiedlichen Druck und/oder unterschiedliche Temperatur und/oder unterschiedliche Zusammensetzung auf, so dass der Fettmasse Inhaltsstoffe zugesetzt und/oder entzogen werden.

Der Zentrifugalmischer umfasst dabei bevorzugt eine im Wesentlichen horizontal angeordneten Trommel und eine, in der Trommel koaxial angeordnete, Welle, wobei der Zentrifugalmischer einen freien Austrag erlaubt und die Welle zweiseitig gelagert ist.

Die Trommel kann so ausgerichtet sein, dass die Auslassöffnung unterhalb der Einlassöffnung angeordnet ist, sodass der Austrieb der Masse durch die Schwerkraft begünstig wird.

Die Welle ist, wie weiter oben ausgeführt, bevorzugt mindestens auf einem Abschnitt mit Stiften versehen, die bevorzugt entlang der Welle spiralförmig angeordnet sind.

Eine Halterung für das erste Lager der Welle befindet sich in der Regel an der Seite der Trommel, an welcher auch der Einlass angeordnet ist. Die Lagerung für das zweite Lager ist am anderen Ende der Welle vorgesehen. Die Halterung für das zweite Lager kann mit der Trommel verbunden sein, beispielsweise über Haltestege. Alternativ kann die Halterung auch an einer Bodenplatte befestigt sein, sodass die beiden Lager entkoppelt sind.

Ein freier Austrag der Masse kann durch eine konzentrische oder quasikonzentrische Austrittsöffnung gewährleistet werden. Die Öffnung weist in Richtung der Wellenachse.

Der Zentrifugalmischer weist eine bevorzugt im Wesentlichen horizontal angeordneten Trommel und eine Welle auf, wobei die Innenwandung der Trommel strukturiert ist, insbesondere derart, dass dadurch die Haftung einer zu fördernden Masse an der Innenwandung beeinflusst wird, insbesondere im Vergleich zu einer glatten Wand erhöht wird.

Für die gezielte Bearbeitung von Fettmassen ist es wichtig, dass die Masse nicht zu kurz und nicht zu lange im Mischer verbleibt, sondern den Stiften eine definierte Zeit ausgesetzt wird. Dazu soll die Masse gleichmässig durch den Mischer getrieben werden. Einerseits ist zu vermeiden, dass die Masse oder Teile davon an der Wand haften bleiben, andererseits, dass die Masse oder Teile davon unbearbeitet durch die Trommel durchrutschen.

Die Wandhaftung kann durch Strukturen an der Innenwand der Trommel beeinflusst werden. Dazu kann die Innenwandung aufgeraut und/oder gewellt und/oder gezahnt und/oder mit Stiften versehen sein.

Vorteilhafterweise ist der Zentrifugalmischer, zum Beispiel mittels eines Doppelwandaufbaus, temperierbar. Er kann also gekühlt oder erwärmt werden, so dass die Wand der Trommel und/oder die Masse in dem Zentrifugalmischer auf einer vorwählbaren Temperatur gehalten werden kann.

Weitere Vorteile und Einzelmerkmale der Erfindung ergeben sich aus der nachfolgenden Beschreibung von Ausführungsbeispielen und aus den Zeichnungen. Es zeigen:
- Fig. 1:: Schematische Darstellung des erfindungsgemässen Verfahrens zur Bearbeitung einer Fettmasse mit einem Zentrifugalmischer
- Fig. 2:: Schematische Darstellung einer bevorzugten Ausführungsform der vorliegenden Erfindung mit Zentrifugalmischer und Walze
- Fig. 3:: Darstellung einer weiteren Ausführungsform der Erfindung mit mehreren Walzen
- Fig. 4:: Darstellung des erfindungsgemässen Verfahrens mit mehreren Zentrifugalmischern
- Fig. 5:: Schematische Darstellung einer ersten Ausführungsform eines Zentrifugalmischers mit zweiseitig gelagerter Welle
- Fig. 6:: Schematische Darstellung einer zweiten Ausführungsform eines Zentrifugalmischers mit zweiseitig gelagerter Welle

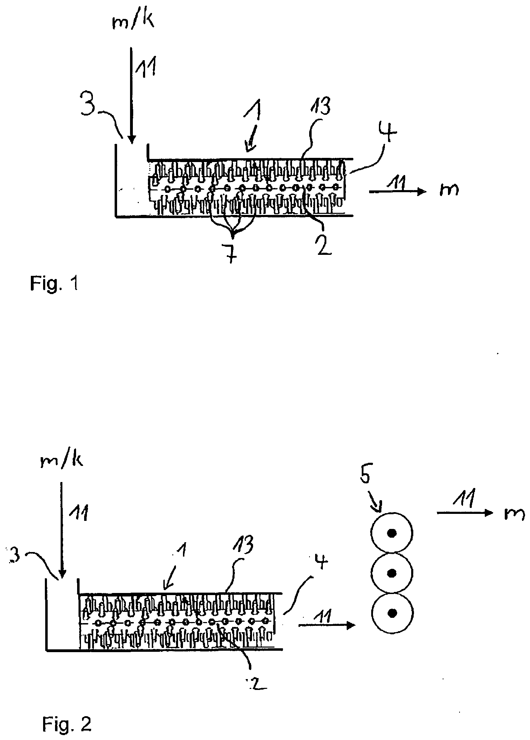

Figur 1 zeigt in schematischer und vereinfachter Darstellung die Bearbeitung von Fettmassen mit mindestens einem Zentrifugalmischer 1. Die Bearbeitungsrichtung entspricht der Bearbeitungsrichtung 11. Dabei wird die Fettmasse m oder die einzelnen zu mischenden Komponenten k der Fettmasse zunächst über den Einlass 3 in den Zentrifugalmischer 1 gegeben. Der Zentrifugalmischer 1 umfasst eine Trommel 13, in der sich eine drehend gelagerte Welle 2 befindet. Die Welle 2 ist über Drehlager 8 mit dem Zentrifugalmischer verbunden. Die Welle 2 weist eine Vielzahl an daran angeordneten Stiften 7 auf. Bevorzugt sind die Stifte 7 spiralförmig angeordnet um für einen Vorschub der Masse zu sorgen. Es können jedoch auch Zentrifugalmischer ohne eine spiralförmige Anordnung zum Einsatz kommen. Der Durchmesser d der Welle, die Länge L sowie die Anordnung der Stifte 7 und der Innendurchmesser D des Zentrifugalmischers können dabei je nach Durchsatz und Anwendung variieren. Ebenfalls variieren kann der Abstand zwischen Stiftspitzen und Innenwandung des Zentrifugalmischers.

Durch die hohe Drehzahl der Welle erfährt die Masse eine Zentrifugalkraft und wird an die Innenwand des Mischers gedrückt.

Durch die kontinuierliche Bewegung der Stifte 7 erfolgt eine optimale Durchmischung der Masse. Je nach Drehzahl ist auch eine Reduktion des durchschnittlichen Durchmessers von suspendierten Partikeln möglich.

Die Fettmasse m wird durch nachschiebende Masse oder dem Vorschub durch den Auslass 4 geschoben. Vorzugsweise weist der Zentrifugalmischer 1 keine Verjüngung am Auslass 4 auf. Dadurch wird die Fettmasse vor dem Auslass 4 nicht aufgestaut. Die Schichtdicke der bearbeiteten Fettmasse m bleibt demnach über die gesamte Länge des Zentrifugalmischers 1 konstant. Dadurch wird die Masse über die Länge des Mischers im Wesentlichen nur durch die Spitzen der Stifte 7 bearbeitet. Da die Drehgeschwindigkeit und damit die kinetische Energie der Stifte 7 von der Welle her zu Spitze hin zunehmen, wird durch die konstante Schichtdicke der Masse m sicher gestellt, dass die Masse m möglichst mit gleichmässiger Geschwindigkeit und mit gleichmässigem Energieeintrag bearbeitet wird. Dies führt zu einer erhöhten Homogenität der Masse m.

Bevorzugt beträgt der Innendurchmesser D der Trommel 13 50-500mm. Bei einem Innendurchmesser D von 50 mm beträgt der Durchmesser d der Welle 2 bevorzugt 20 mm und die Länge L des Zentrifugalmischers 1 200 mm, bei einem Innendurchmesser D von 100 mm beträgt der Durchmesser d der Welle 2 bevorzugt 40 mm und die Länge L des Zentrifugalmischers 1 200-400 mm, bei einem Innendurchmesser D von 400 mm beträgt der Durchmesser d der Welle 2 bevorzugt 100 mm und die Länge L des Zentrifugalmischers 1 200-1000 mm.

Die Masse kann anschliessend in weiteren Bearbeitungsschritten, die in Bearbeitungsrichtung 11 nach dem Zentrifugalmischer 1 erfolgen, weiterverarbeitet werden. Bei der Herstellung einfacher Fettmasseprodukte, wie Compounds oder Füllungen, kann die Bearbeitung nach dem Durchlaufen des Zentrifugalmischers bereits abgeschlossen sein.

Figur 2 zeigt schematisch eine weitere Ausführungsform der vorliegenden Erfindung. Dabei durchläuft die Fettmasse m ein in Bearbeitungsrichtung 11 nach dem Zentrifugalmischer 1 angeordnetes Walzwerk 5. Das Walzwerk 5 kann eine beliebige Anzahl an Walzen aufweisen, jedoch werden 2-, 3- oder 5-Walzwerke bevorzugt. Bei der Schokoladeherstellung kann die Verwendung mindestens eines Zentrifugalmischers den Einsatz eines 3- anstatt eines 5-Walzwerks ermöglichen, ohne Einbussen bei der Qualität des Endprodukts. Durch geeignete Wahl der Drehzahl der Welle 2 lassen sich die Parameter, welche die Konsistenz der Fettmasse m ausmachen, auf einen vorbestimmten Wert einstellen, der für den anschliessenden Walzvorgang in Walzwerk 5 optimal ist. Dadurch lassen sich Justierungen des Walzwerks 5 vermeiden. Ausserdem können durch eine einfache Veränderung der Drehzahl der Welle 2 die Eigenschaften des Endprodukts verändert werden.

Nicht zuletzt lässt sich mit der Wahl der Drehzahl auch der Durchsatz der Masse steuern.

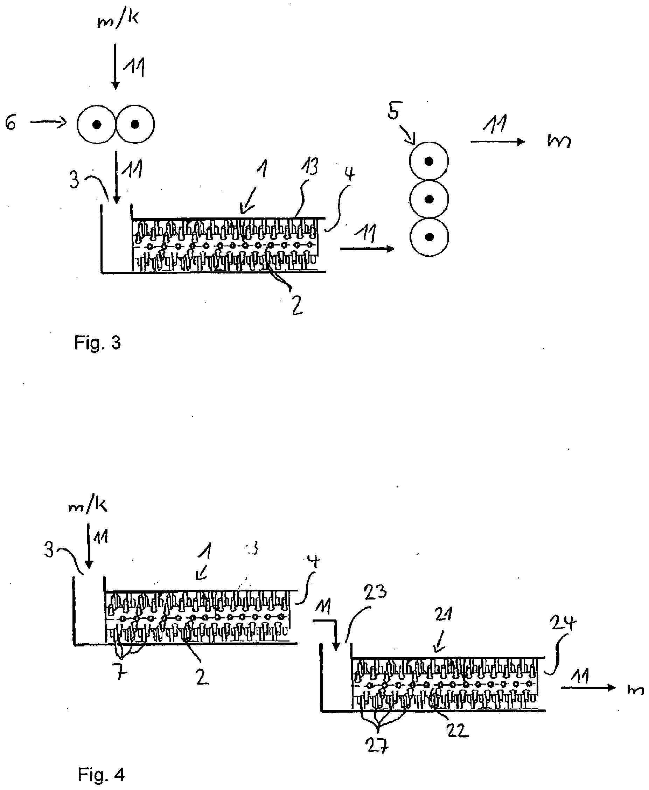

In Figur 3 ist eine weitere Ausführungsform der Erfindung zu sehen. Dabei wird die Fettmasse m oder die einzelnen Komponenten k zunächst durch ein Vorwalzwerk 6 gewalzt, welches in Bearbeitungsrichtung 11 vor dem Zentrifugalmischer angeordnet ist. Dabei wird der durchschnittliche Durchmesser von suspendierten Partikeln in der Masse und der Partikeldurchmesser von festen Komponenten bereits vor dem Zentrifugalmischer 1 reduziert. Nach dem Vorwalzen werden die Komponenten im Zentrifugalmischer gemischt und/oder zerkleinert. Die Fettmasse m kann anschliessend durch ein weiteres, in Bearbeitungsrichtung nach dem Zentrifugalmischer 1 angeordnetes Walzwerk 5 geführt werden. Alternativ können die Fettmasse m oder die einzelnen Komponenten k nur durch die Schritte des Walzens in Vorwalze 6 sowie des Mischens und/oder Zerkleinerns in Zentrifugalmischer 1 bearbeitet werden, ohne dass die Masse m danach in Walzwerk 5 gewalzt wird.

Figur 4 stellt schematisch eine weitere bevorzugte Ausführungsform der Erfindung dar. Bei dieser Ausführung werden die Fettmasse m oder die einzelnen Komponenten k zunächst im Zentrifugalmischer 1 vermischt und/oder zerkleinert. Die Komponenten der Fettmasse m werden danach gleich in einem zweiten Zentrifugalmischer 21 weiter vermischt und/oder zerkleinert. Die Zentrifugalmischer können dabei unmittelbar hintereinander angeordnet sein oder die Fettmasse kann alternativ vom ersten in den zweiten Zentrifugalmischer befördert oder gepumpt werden. Eine weitere, nicht gezeigte Ausführungsform sieht vor, dass hinter dem zweiten Zentrifugalmischer noch weitere Zentrifugalmischer angeordnet werden. Es versteht sich, dass die einzelnen Zentrifugalmischer verschiedene Grössen und Stiftanordnungen aufweisen können. Ausserdem können je nach Anwendung die Drehzahlen der Wellen 2, 22 unterschiedlich sein. Beispielsweise lässt sich durch eine solche Anordnung eine Fettmasse kontinuierlich verflüssigen.

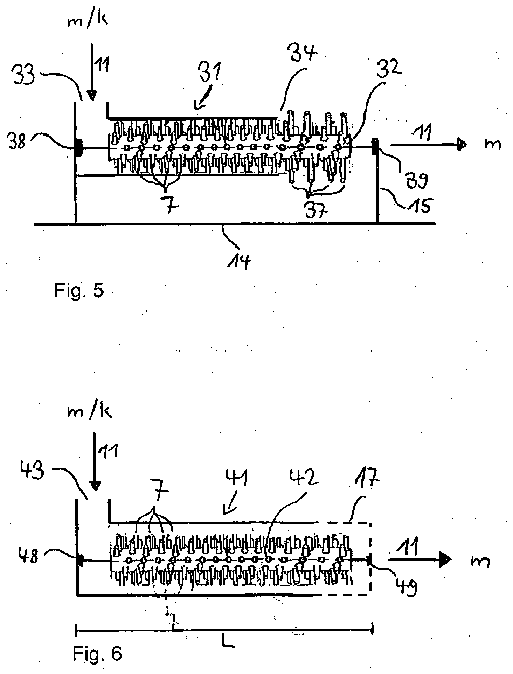

Figur 5 ist eine schematische Darstellung einer ersten Ausführungsform eines Zentrifugalmischers 31 mit zweiseitig gelagerter Welle 32. Ein erstes Lager 38 befindet sich in der Nähe des Einlasses 33, ein zweites Lager 39 in der Nähe des Auslasses. Insbesondere bei grösseren Trommelvolumina und/oder Trommellängen ist die Welle 32 bei zweiseitiger Lagerung stabiler gelagert.

Die Lagerhalterung für das zweite Lager 39 ist nicht direkt mit der Trommel 13 verbunden, sondern bevorzugt an einer Bodenplatte 14 befestigt. Dadurch werden die beiden Drehlager 38, 39 voneinander entkoppelt.

Der freie Austrag wird durch einen konzentrischen Auslass 34 gewährleistet.

Die Welle 32 kann über die Länge L der Trommel 13 hinausgeführt sein. Bevorzugt sind im hinausragenden Bereich der Welle 32 noch Stifte 37 angeordnet, die den konzentrischen Austrag begünstigen. Die Stifte 37 können in diesem Bereich länger sein als die Stifte 7.

Figur 6 ist eine schematische Darstellung einer zweiten Ausführungsform eines Zentrifugalmischers 41 mit zweiseitig gelagerter Welle 42. Ein erstes Lager 48 befindet sich in der Nähe des Einlasses 43, ein zweites Lager 49 in der Nähe des Auslasses 44.

In diesem Beispiel ist die Lagerhalterung für das zweite Lager 49 direkt mit der Trommel 13 verbunden. Die Befestigung erfolgt über Verbindungsstege 17, zwischen denen genügend grosse Austrittsfenster frei bleiben, sodass eine quasi konzentrische Auslassöffnung 44 vorliegt und ein rückstaufreier Austritt der Masse m möglich ist.

Die Innenwandung kann für eine verbesserte Wandhaftung strukturiert sein.

## Patentansprüche

1. Verfahren zur Bearbeitung einer Fettmasse (m), nämlich einer Kakao- oder Schokoladenmasse, wobei die Komponenten (k) der Fettmasse (m) in einem offenen Zentrifugalmischer (1; 21; 31; 41), der einen freien Austrag erlaubt, sodass es zu keinem Rückstau der Fettmasse kommt, zerkleinert oder zerkleinert und vermischt werden, wobei der Durchmesser von in der Fettmasse suspendierten Partikeln reduziert wird und wobei die Fettmasse in einer im Wesentlichen horizontal angeordneten Trommel geführt wird, in der sich eine rotierende Welle befindet, die mindestens teilweise mit Stiften versehen ist, die derart angeordnet sind, dass die Drehgeschwindigkeit der Stifte von der Welle her zu den Spitzen hin zunimmt, wobei das Ende der Trommel offen, nicht oder nur geringfügig verjüngt ist und die Öffnung in Richtung der Wellenachse weist, und wobei die Geschwindigkeit, welche die auf der Welle des Zentrifugalmischers angeordneten Stifte (7; 37) an ihrer Spitze aufweisen, zwischen 5 bis 600 km/h beträgt und die gesamte im Zentrifugalmischer (1; 21; 31; 41) vorhandene Masse (m) mit im Wesentlichen dieser Geschwindigkeit bearbeitet wird.

2. Verfahren nach Anspruch 1, **dadurch gekennzeichnet, dass** Durchmesser der Komponenten (k) der Fettmasse (m) durch den Zentrifugalmischer (1; 21; 31; 41) im Wesentlichen auf unter 200µm, insbesondere auf unter 150µm, reduziert werden.

3. Verfahren nach einem der Ansprüche 1 oder 2, **dadurch gekennzeichnet, dass** die Drehzahl der Welle (2; 22; 32; 42) des Zentrifugalmischers (1; 21; 31; 41) im Bereich von 500 bis 6000 rpm liegt, bevorzugt im Bereich von 1000 bis 4000 rpm.

4. Verfahren nach einem der Ansprüche 1 bis 3, **dadurch gekennzeichnet, dass** mindestens ein Parameter, welcher für die Konsistenz der Fettmasse (m) charakteristisch ist, wie z.B. Viskosität oder Feuchtigkeit, durch geeignete Wahl der Drehzahl der Welle (2; 22; 32; 42) im Zentrifugalmischer (1; 21; 31; 41) auf einen vorbestimmten Wert eingestellt wird.

5. Verfahren nach einem der Ansprüche 1 bis 3, **dadurch gekennzeichnet, dass** in einem weiteren Schritt die Fettmasse (m) gewalzt wird, insbesondere in einem 2-, 3- oder 5-Walzwerk (5).

6. Verfahren nach einem der vorhergehenden Ansprüche, **dadurch gekennzeichnet, dass** die Komponenten (k) der Fettmasse (m) vor dem Vermischen im Zentrifugalmischer (1; 21; 31; 41) in einem Vorwalzwerk (6) vorzerkleinert werden.

7. Verfahren nach einem der Ansprüche 1 bis 6, **dadurch gekennzeichnet, dass** die Komponenten (k) der Fettmasse (m) in mindestens einem weiteren Zentrifugalmischer (21) weiter zerkleinert und/oder vermischt werden.

8. Verfahren nach einem der Ansprüche 1 bis 7, **dadurch gekennzeichnet, dass** in einem weiteren Schritt die Komponenten (k) der Fettmasse (m) in einer Vorrichtung zur Nasszerkleinerung, insbesondere einer Rührwerksmühle, bearbeitet werden.

9. Verfahren nach einem der Ansprüche 1 bis 7, **dadurch gekennzeichnet, dass** Durchmesser von stückigen Bestandteilen der Fettmasse (m) bei der Bearbeitung der Masse im Zentrifugalmischer (1; 21; 31; 41) auf unter 5 mm, insbesondere auf unter 1 mm reduziert werden.

10. Verwendung mindestens eines offenen Zentrifugalmischers (1; 21; 31; 41) mit einer im Wesentlichen horizontal angeordneten Trommel, in der sich eine rotierende Welle befindet, die mindestens teilweise mit Stiften versehen ist, die derart angeordnet sind, dass die Drehgeschwindigkeit der Stifte von der Welle her zu den Spitzen hin zunimmt, der einen freien Austrag erlaubt, sodass es zu keinem Rückstau der Fettmasse kommt, wobei das Ende der Trommel offen, nicht oder nur geringfügig verjüngt ist und die Öffnung in Richtung der Wellenachse weist, zur Bearbeitung einer Fettmasse (m), nämlich einer Kakao- oder Schokoladenmasse, insbesondere mit stückigen Bestandteilen, wobei die Komponenten (k) der Fettmasse zerkleinert oder vermischt und zerkleinert werden und wobei der Durchmesser von in der Fettmasse suspendierten Partikeln reduziert wird und wobei die Geschwindigkeit, welche die auf der Welle des Zentrifugalmischers angeordneten Stifte (7; 37) an ihrer Spitze aufweisen, zwischen 5 bis 600 km/h beträgt und die gesamte im Zentrifugalmischer (1; 21; 31; 41) vorhandene Masse (m) mit im Wesentlichen dieser Geschwindigkeit bearbeitet wird.

11. Verwendung mindestens eines Zentrifugalmischers (1; 21; 31; 41) nach Anspruch 10 zur Bearbeitung einer Fettmasse (m) vor Einbringen in ein Walzwerk (5), vorzugsweise ein 2-, 3- oder 5-Walzwerk.

12. Verfahren entsprechend Anspruch 1, mit einer Produktionsstrecke für die Bearbeitung eine Fettmasse (m), nämlich einer Kakao- oder Schokoladenmasse, nämlich zur Zerkleinerung oder Vermischung und Zerkleinerung der Komponenten (k) der Fettmasse, wobei der Durchmesser von in der Fettmasse suspendierten Partikeln reduziert wird, **dadurch gekennzeichnet, dass** die Strecke mindestens einen offenen Zentrifugalmischer (1; 21; 31; 41) umfasst, der einen freien Austrag erlaubt, sodass es zu keinem Rückstau der Fettmasse kommt, wobei die Fettmasse in einer im Wesentlichen horizontal angeordneten Trommel führbar ist, in der sich eine rotierende Welle befindet, die mindestens teilweise mit Stiften versehen ist, die derart angeordnet sind, dass die Drehgeschwindigkeit der Stifte von der Welle her zu den Spitzen hin zunimmt, wobei das Ende der Trommel offen, nicht oder nur geringfügig verjüngt ist und die Öffnung in Richtung der Wellenachse weist, wobei in Bearbeitungsrichtung (11) nach dem Zentrifugalmischer (1; 21; 31; 41) mindestens ein Walzwerk (5), vorzugsweise mindestens ein 2-, 3- oder 5-Walzwerk, angeordnet ist und/oder dass in Bearbeitungsrichtung (11) vor dem Zentrifugalmischer (1; 21; 31; 41) mindestens ein Walzwerk (6), vorzugsweise mindestens ein 2-Walzerk, angeordnet ist, und/oder dass in Bearbeitungsrichtung (11) vor dem Zentrifugalmischer (1; 21; 31; 41) mindestens ein Rühr- und/oder Mischwerk angeordnet ist, und/oder dass in der Strecke mindestens eine Vorrichtung zur Nasszerkleinerung, beispielsweise eine Rührwerkskugelmühle, angeordnet ist.

13. Verfahren nach Anspruch 12, **dadurch gekennzeichnet, dass** der Zentrifugalmischer (1; 21; 31; 41) derart in der Strecke angeordnet ist, dass der Zentrifugalmischer (1; 21; 31; 41) mindestens zweimal von der Fettmasse (m) oder zumindest Teilen davon durchlaufen wird.

14. Verfahren gemäss mindestens einem der Ansprüche 1-9, **dadurch gekennzeichnet, dass** die Welle (2; 22; 32; 42) zweiseitig gelagert ist.

15. Verfahren gemäss mindestens einem der Ansprüche 1-9 und 14, **dadurch gekennzeichnet, dass** die Innenwandung der Trommel (13) strukturiert ist, insbesondere derart, dass dadurch die Haftung einer zu fördernden Masse an der Innenwandung begünstigt wird, wobei insbesondere die Innenwandung aufgeraut und/oder gewellt und/oder gezahnt und/oder mit Stiften versehen ist.

16. Verfahren gemäss mindestens einem der Ansprüche 1-9, 14 und 15, **dadurch gekennzeichnet, dass** der Zentrifugalmischer temperierbar ist, insbesondere einen Doppelwandaufbau aufweist.

17. Verwendung entsprechend Anspruch 10, mit einer Produktionsstrecke für die Bearbeitung eine Fettmasse (m), nämlich einer Kakao- oder Schokoladenmasse, nämlich zur Zerkleinerung oder Vermischung und Zerkleinerung der Komponenten (k) der Fettmasse, wobei der Durchmesser von in der Fettmasse suspendierten Partikeln reduziert wird, **dadurch gekennzeichnet, dass** die Strecke mindestens einen offenen Zentrifugalmischer (1; 21; 31; 41) umfasst, der einen freien Austrag erlaubt, sodass es zu keinem Rückstau der Fettmasse kommt, wobei die Fettmasse in einer im Wesentlichen horizontal angeordneten Trommel führbar ist, in der sich eine rotierende Welle befindet, die mindestens teilweise mit Stiften versehen ist, die derart angeordnet sind, dass die Drehgeschwindigkeit der Stifte von der Welle her zu den Spitzen hin zunimmt, wobei das Ende der Trommel offen, nicht oder nur geringfügig verjüngt ist und die Öffnung in Richtung der Wellenachse weist, wobei in Bearbeitungsrichtung (11) nach dem Zentrifugalmischer (1; 21; 31; 41) mindestens ein Walzwerk (5), vorzugsweise mindestens ein 2-, 3- oder 5-Walzwerk, angeordnet ist und/oder dass in Bearbeitungsrichtung (11) vor dem Zentrifugalmischer (1; 21; 31; 41) mindestens ein Walzwerk (6), vorzugsweise mindestens ein 2-Walzerk, angeordnet ist, und/oder dass in Bearbeitungsrichtung (11) vor dem Zentrifugalmischer (1; 21; 31; 41) mindestens ein Rühr- und/oder Mischwerk angeordnet ist, und/oder dass in der Strecke mindestens eine Vorrichtung zur Nasszerkleinerung, beispielsweise eine Rührwerkskugelmühle, angeordnet ist.

## Claims

1. Method for preparation of a fat mass (m), namely a cocoa or chocolate mass, wherein the components (k) of the fat mass (m) are comminuted or comminuted and mixed in a open centrifugal mixer (1; 21; 31; 41) that permits a free discharge, in such a manner that no backup of the fat mass occurs, wherein the diameter of particles suspended in the fat mass is reduced, and wherein the fat mass is conducted in a substantially horizontally arranged drum in which a rotating shaft is situated, which shaft is provided at least in part with pegs that are arranged in such a manner that the speed of rotation of the pegs increases from the shaft to the tips, wherein the end of the drum is open and is not tapered or is only slightly tapered, and the opening faces in the direction of the shaft axis, and wherein the speed which the pegs (7; 37) that are arranged on the shaft of the centrifugal mixer have at the tips thereof is between 5 and 600 km/h, and the entire mass (m) present in the centrifugal mixer (1; 21; 31; 41) is prepared at substantially this speed.

2. Method according to Claim 1, **characterized in that** diameters of the components (k) of the fat mass (m) are substantially reduced to below 200 µm, in particular to below 150 µm, by the centrifugal mixer (1; 21; 31; 41).

3. Method according to either of Claims 1 and 2, **characterized in that** the speed of rotation of the shaft (2; 22; 32; 42) of the centrifugal mixer (1; 21; 31; 41) is in the range from 500 to 6000 rpm, preferably in the range from 1000 to 4000 rpm.

4. Method according to any one of Claims 1 to 3, **characterized in that** at least one parameter which is characteristic of the consistency of the fat mass (m), such as e.g. viscosity or moisture, is adjusted to a predetermined value by suitable choice of the speed of rotation of the shaft (2; 22; 32; 42) in the centrifugal mixer (1; 21; 31; 41).

5. Method according to any one of Claims 1 to 3, **characterized in that**, in a further step, the fat mass (m) is rolled, in particular in a 2-, 3- or 5-roll refiner (5).

6. Method according to any one of the preceding claims, **characterized in that** the components (k) of the fat mass (m) are precomminuted in a prerefiner (6) before the mixing in the centrifugal mixer (1; 21; 31; 41) .

7. Method according to any one of Claims 1 to 6, **characterized in that** the components (k) of the fat mass (m) are further comminuted and/or mixed in at least one further centrifugal mixer (21).

8. Method according to any one of Claims 1 to 7, **characterized in that**, in a further step, the components (k) of the fat mass (m) are prepared in a device for wet comminution, in particular an agitator mill.

9. Method according to any one of Claims 1 to 7, **characterized in that** diameters of piece-form constituents of the fat mass (m) in the preparation of the mass in the centrifugal mixer (1; 21; 31; 41) are reduced to below 5 mm, in particular to below 1 mm.

10. Use of at least one open centrifugal mixer (1; 21; 31; 41) having a substantially horizontally arranged drum in which there is situated a rotating shaft that is provided at least in part with pegs that are arranged in such a manner that the speed of rotation of the pegs increases from the shaft to the tips, which permits a free discharge, in such a manner that no backup of the fat mass occurs, wherein the end of the drum is open and is not tapered or is only slightly tapered, and the opening faces in the direction of the shaft axis, for preparation of a fat mass (m), namely a cocoa mass or chocolate mass, in particular having piece-form constituents, wherein the components (k) of the fat mass are comminuted or mixed and comminuted and wherein the diameter of particles suspended in the fat mass is reduced, and wherein the speed which the pegs (7; 37) that are arranged on the shaft of the centrifugal mixer have at the tips thereof is between 5 and 600 km/h, and the entire mass (m) present in the centrifugal mixer (1; 21; 31; 41) is prepared at substantially this speed.

11. Use of at least one centrifugal mixer (1; 21; 31; 41) according to Claim 10 for preparing a fat mass (m) before it is introduced into a roll refiner (5), preferably a 2-, 3- or 5-roll refiner.

12. Method according to Claim 1, having a production section for the preparation of a fat mass (m), namely a cocoa mass or chocolate mass, namely for comminuting or mixing and comminuting the components (k) of the fat mass, wherein the diameter of particles suspended in the fat mass is reduced, **characterized in that** the section comprises at least one open centrifugal mixer (1; 21; 31; 41) which permits a free discharge in such a manner that no backup of the fat mass occurs, wherein the fat mass is conductable in a substantially horizontally arranged drum in which a rotating shaft is situated that is provided at least in part with pegs that are arranged in such a manner that the speed of rotation of the pegs increases from the shaft to the tips, wherein the end of the drum is open and is not tapered or is only slightly tapered, and the opening faces in the direction of the shaft axis, wherein downstream of the centrifugal mixer (1; 21; 31; 41) in the direction of preparation (11), at least one roll refiner (5), preferably at least one 2-, 3- or 5-roll refiner, is arranged, and/or upstream of the centrifugal mixer (1; 21; 31; 41) in the direction of preparation (11) at least one roll refiner (6), preferably at least one 2-roll refiner, is arranged, and/or upstream of the centrifugal mixer (1; 21; 31; 41) in the direction of preparation (11) at least one agitator and/or mixer is arranged, and/or in the section at least one device for wet comminution, for example an agitator ball, is arranged.

13. Method according to Claim 12, **characterized in that** the centrifugal mixer (1; 21; 31; 41) is arranged in the section in such a manner that the centrifugal mixer (1; 21; 31; 41) is passed through at least twice by the fat mass (m) or at least parts thereof.

14. Method according to at least one of Claims 1-9, **characterized in that** the shaft (2; 22; 32; 42) is mounted at two ends.

15. Method according to at least one of Claims 1-9 and 14, **characterized in that** the inner wall of the drum (13) is structured, in particular in such a manner that as a result the adhesion of a mass that is to be transported to the inner wall is favoured, wherein, in particular, the inner wall is roughened and/or corrugated and/or toothed and/or provided with pegs.

16. Method according to at least one of Claims 1-9, 14 and 15, **characterized in that** the centrifugal mixer is able to be brought to and held at a temperature, in particular has a double-wall structure.

17. Use according to Claim 10, having a production section for preparation of a fat mass (m), namely a cocoa mass or chocolate mass, namely for comminuting or mixing and comminuting the components (k) of the fat mass, wherein the diameter of particles suspended in the fat mass is reduced, **characterized in that** the section comprises at least one open centrifugal mixer (1; 21; 31; 41) which permits a free discharge in such a manner that no backup of the fat mass occurs, wherein the fat mass is conductible in a substantially horizontally arranged drum in which a rotating shaft is situated that is provided at least in part with pegs that are arranged in such a manner that the speed of rotation of the pegs increases from the shaft to the tips, wherein the end of the drum is open and is not tapered or is only slightly tapered, and the opening faces in the direction of the shaft axis, wherein downstream of the centrifugal mixer (1; 21; 31; 41) in the direction of preparation (11) at least one roll refiner (5), preferably at least one 2-, 3- or 5-roll refiner, is arranged and/or upstream of the centrifugal mixer (1; 21; 31; 41) in the direction of preparation (11), at least one roll refiner (6), preferably at least one 2-roll refiner, is arranged, and/or upstream of the centrifugal mixer (1; 21; 31; 41) in the direction of preparation (11) at least one agitator and/or mixer is arranged, and/or at least one device for wet comminution, for example an agitator ball mill, is arranged in the section.

## Revendications

1. Procédé pour le traitement d'une masse de matière grasse (m), à savoir d'une masse de cacao ou de chocolat, dans lequel les composants (k) de la masse de matière grasse (m) sont, dans un mélangeur centrifuge ouvert (1 ; 21 ; 31 ; 41), qui permet une évacuation libre de façon qu'il n'en résulte pas de retenue de la masse de matière grasse, broyés, ou broyés et mélangés, le diamètre des particules en suspension dans la masse de matière grasse subissant une réduction, et la matière grasse étant envoyée dans un tambour disposé pour l'essentiel horizontalement, dans lequel se trouve un arbre tournant, qui au moins partiellement est pourvu d'aiguilles, qui sont disposées de telle sorte que la vitesse de rotation des aiguilles augmente de l'arbre vers la pointe, l'extrémité du tambour étant ouverte et n'étant pas rétrécie ou seulement dans une faible mesure, et l'ouverture étant orientée dans la direction de l'axe de l'arbre, et la vitesse que les aiguilles (7 ; 37) disposées sur l'arbre du mélangeur centrifuge présentent en leur extrémité étant comprise entre 5 et 600 km/h, et la totalité de la masse (m) présente dans le mélangeur centrifuge (1 ; 21 ; 31; 41) étant traitée essentiellement à cette vitesse.

2. Procédé selon la revendication 1, **caractérisé en ce que** le diamètre des composants (k) de la masse de matière grasse (m) subit, grâce au mélangeur centrifuge (1 ; 21 ; 31 ; 41), une réduction allant pour l'essentiel à une valeur inférieure à 200 µm, en particulier inférieure à 150 µm.

3. Procédé selon l'une des revendications 1 ou 2, **caractérisé en ce que** la vitesse de rotation de l'arbre (2 ; 22 ; 32 ; 42) du mélangeur centrifuge (1 ; 21 ; 31 ; 41) est comprise dans la plage de 500 à 6000 tr/min, de préférence dans la plage de 1000 à 4000 tr/min.

4. Procédé selon l'une des revendications 1 à 3, **caractérisé en ce qu'**au moins un paramètre, qui est caractéristique de la consistance de la masse de matière grasse (m), comme p.ex. sa viscosité ou son humidité, est ajusté à une valeur prédéfinie grâce au choix approprié de la vitesse de rotation de l'arbre (2 ; 22 ; 32 ; 42) dans le mélangeur centrifuge (1 ; 21 ; 31 ; 41).

5. Procédé selon l'une des revendications 1 à 3, **caractérisé en ce que**, dans une étape supplémentaire, la masse de matière grasse (m) est laminée, en particulier dans un laminoir (5) à 2, 3 ou 5 cylindres.

6. Procédé selon l'une des revendications précédentes, **caractérisé en ce que** les composants (k) de la masse de matière grasse (m) sont, avant leur mélange dans le mélangeur centrifuge (1 ; 21 ; 31 ; 41), prébroyés dans un prélaminoir (6).

7. Procédé selon l'une des revendications 1 à 6, **caractérisé en ce que** les composants (k) de la masse de matière grasse (m) sont soumis à un broyage et/ou à un mélange supplémentaire dans au moins un mélangeur centrifuge supplémentaire (21).

8. Procédé selon l'une des revendications 1 à 7, **caractérisé en ce que**, dans une étape supplémentaire, les composants (k) de la masse de matière grasse (m) sont traités dans un dispositif de broyage par voie humide, en particulier un broyeur agitateur.

9. Procédé selon l'une des revendications 1 à 7, **caractérisé en ce que** le diamètre des constituants en morceaux de la masse de matière grasse (m) subit, lors du traitement de la masse dans le mélangeur centrifuge (1 ; 21 ; 31 ; 41), une réduction à une valeur inférieure à 5 mm, en particulier inférieure à 1 mm.

10. Utilisation d'au moins un mélangeur centrifuge ouvert (1 ; 21 ; 31 ; 41), comportant un tambour disposé pour l'essentiel horizontalement, dans lequel se trouve un arbre tournant qui au moins partiellement est pourvu d'aiguilles qui sont disposées de telle sorte que la vitesse de rotation des aiguilles augmente de l'arbre vers la pointe, qui permet une évacuation libre, de telle sorte qu'il n'en résulte pas de retenue de la masse de matière grasse, l'extrémité du tambour étant ouverte et ne se rétrécissant pas ou seulement dans une faible mesure, et l'ouverture étant orientée dans la direction de l'axe de l'arbre, pour le traitement d'une masse de matière grasse (m), à savoir d'une masse de cacao ou de chocolat, comportant en particulier des constituants en morceaux, les composants (k) de la masse de matière grasse subissant un broyage, ou un mélange et un broyage, et le diamètre des particules en suspension dans la masse de matière grasse subissant une réduction, et la vitesse que les aiguilles (7 ; 37) disposées sur l'arbre du mélangeur centrifuge présentent à leur pointe étant comprise entre 5 et 600 km/h, et la totalité de la masse (m) présente dans le mélangeur centrifuge (1 ; 21 ; 31 ; 41) étant traitée pour l'essentiel à cette vitesse.

11. Utilisation d'au moins un mélangeur centrifuge (1 ; 21 ; 31 ; 41) selon la revendication 10, pour le traitement d'une masse de matière grasse (m) avant introduction dans un laminoir (5), de préférence un laminoir à 2, 3 ou 5 cylindres.

12. Procédé correspondant à la revendication 1, comportant une ligne de production pour le traitement d'une masse de matière grasse (m), à savoir d'une masse de cacao ou de chocolat, à savoir pour le broyage, ou le mélange et le broyage des composants (k) de la masse de matière grasse, le diamètre des particules en suspension dans la masse de matière grasse subissant une réduction, **caractérisé en ce que** la ligne comprend au moins un mélangeur centrifuge ouvert (1 ; 21 ; 31 ; 41), qui permet une évacuation libre de telle sorte qu'il n'en résulte pas de retenue de la masse de matière grasse, la masse de matière grasse pouvant être envoyée dans un tambour disposé pour l'essentiel horizontalement, dans lequel se trouve un arbre tournant, qui au moins partiellement est pourvu d'aiguilles, qui sont disposées de telle sorte que la vitesse de rotation des aiguilles augmente de l'arbre vers la pointe, l'extrémité du tambour étant ouverte et ne se rétrécissant pas ou seulement dans une faible mesure, et l'ouverture étant orientée dans la direction de l'axe de l'arbre, au moins un laminoir (5), de préférence un laminoir à 2, 3 ou 5 cylindres, étant disposé dans la direction de traitement (11) en aval du mélangeur centrifuge (1 ; 21 ; 31 ; 41), et/ou **en ce que**, dans la direction de traitement (11), au moins un laminoir (6), de préférence au moins un laminoir à 2 cylindres, est disposé en amont du mélangeur centrifuge (1 ; 21 ; 31 ; 41), et/ou que, dans la direction de traitement (11), au moins un agitateur et/ou un mélangeur sont disposés en amont du mélangeur centrifuge (1 ; 21 ; 31 ; 41), et/ou qu'un dispositif pour le broyage par voie humide, par exemple un broyeur à billes muni d'un agitateur, est disposé sur la ligne.

13. Procédé selon la revendication 12, **caractérisé en ce que** le mélangeur centrifuge (1 ; 21 ; 31 ; 41) est disposé sur la ligne de telle sorte que le mélangeur centrifuge (1 ; 21 ; 31 ; 41) soit au moins deux fois traversé par la masse de matière grasse (m) ou au moins par des parties de cette dernière.

14. Procédé selon au moins l'une des revendications 1 à 9, **caractérisé en ce que** l'arbre (2 ; 22 ; 32 ; 42) est supporté sur ses deux extrémités.

15. Procédé selon au moins l'une des revendications 1 à 9 et 14, **caractérisé en ce que** la paroi intérieure du tambour (13) est structurée, en particulier de telle sorte que l'adhérence, à la paroi intérieure, d'une masse à transporter, en soit favorisée, en particulier la paroi intérieure étant rendue rugueuse et/ou étant ondulée et/ou dentée et/ou munie d'aiguilles.

16. Procédé selon au moins l'une des revendications 1 à 9, 14 et 15, **caractérisé en ce que** le mélangeur centrifuge peut être porté à l'équilibre de température, et comprend en particulier une structure à double paroi.

17. Utilisation selon la revendication 10, avec une ligne de production pour le traitement d'une masse de matière grasse (m), à savoir une masse de cacao ou de chocolat, à savoir pour le broyage, ou le mélange et le broyage des composants (k) de la masse de matière grasse, le diamètre des particules en suspension dans la masse de matière grasse subissant une réduction, **caractérisée en ce que** la ligne comprend au moins un mélangeur centrifuge ouvert (1 ; 21 ; 31 ; 41), qui autorise une évacuation libre, de telle sorte qu'il n'en résulte pas de retenue de la masse de matière grasse, la masse de matière grasse pouvant être envoyée dans un tambour disposé pour l'essentiel horizontalement, dans lequel se trouve un arbre tournant, qui au moins partiellement est pourvu d'aiguilles, qui sont disposées de telle sorte que la vitesse de rotation des aiguilles augmente de l'arbre vers la pointe, l'extrémité du tambour étant ouverte et ne se rétrécissant pas ou seulement dans une faible mesure, au moins un laminoir (5), et l'ouverture étant orientée dans la direction de l'axe de l'arbre, de préférence au moins un laminoir à 2, 3 ou 5 cylindres, étant disposé dans la direction de traitement (11) en aval du mélangeur centrifuge (1 ; 21 ; 31 ; 41), et/ou qu'au moins un laminoir (6), de préférence au moins un laminoir à 2 cylindres, est disposé dans la direction de traitement (11) en amont du mélangeur centrifuge (1 ; 21 ; 31 ; 41), et/ou qu'au moins un agitateur et/ou un mélangeur est disposé dans la direction de traitement (11) en amont du mélangeur centrifuge (1 ; 21 ; 31 ; 41), et/ou qu'au moins un dispositif de broyage par voie humide, par exemple un broyeur à billes muni d'un agitateur, est disposé sur la ligne.
